# EUROPÄISCHE PATENTSCHRIFT

(11) **EP 2 344 793 B1**
(45) Veröffentlichungstag und Bekanntmachung des Hinweises auf die Patenterteilung: **12.03.2014**
(21) Anmeldenummer: 09798865.3
(22) Anmeldetag: 30.10.2009
(51) Int. Cl.: F16K 31/50

(54) **ANTRIEBSKARTUSCHE**
DRIVE CARTRIDGE
CARTOUCHE D'ENTRAÎNEMENT

(30) Priorität: 31.10.2008 DE 102008054103
(43) Veröffentlichungstag der Anmeldung: 20.07.2011
(73) Patentinhaber: Friatec Aktiengesellschaft, 68229 Mannheim (DE)
(72) Erfinder: SCHWARTZ, Simon, 66994 Dahn (DE); JUNGMANN, Georg, 69517 Gorxheimertal (DE); LANG, Heiko, 68809 Neulußheim (DE); SCHMITT, Harald, 68309 Mannheim (DE); ROTHERMEL, Alexander, 68239 Mannheim (DE)
(74) Vertreter: Tönhardt, Marion
(86) Internationale Anmeldenummer: PCT/DE2009/001517
(87) Internationale Veröffentlichungsnummer: WO 2010/048942

(56) Entgegenhaltungen:
- GB-A- 613 520
- US-A- 1 958 988
- US-A- 3 820 564
- US-A- 4 543 813

## Beschreibung

Die Erfindung betrifft eine Antriebskartusche, mit einem Stellantrieb, bei dem eine Spindel in einem hohlzylindrischen Antriebselement geführt zwischen zwei axial beabstandeten Endpositionen, die durch die axiale Länge des Antriebselementes definiert sind, bewegbar ist wobei das Antriebselement eine Außenkontur mit Unrundprofil hat, und einer Domhülse, die das Antriebselement drehfest und verschiebefest umgibt, wobei die Domhülse an das gewählte Profil des Antriebselementes angepasst und ist vorzugsweise aus einem an das Antriebselement angrenzenden Profilelement und einer das Profilelement umgebenden Außenhaut aufgebaut ist.

Insbesondere im Brauch- und/oder Abwasserbereich sind Rohrleitungsnetze aus thermoplastischen Kunststoffen, wie Polyethylen, bevorzugt, da sie dauerhaft, korrosionsbeständig und einfach in der Handhabung sind. Auch bestimmte Komponenten, so wie Absperrarmaturen, werden zur optimalen Anbindung an das Rohrleitungsnetz weitgehend aus thermoplastischen Kunststoffen hergestellt.

Beispielsweise zeigt die DE 10 2006 030 027 A1 eine Absperrarmatur, deren Gehäuse aus einem thermoplastischen Kunststoff, so wie Polyethylen, hergestellt werden kann, wobei der Stellantrieb und eine den Stellantrieb umgebende Hülse aus Metall bestehen. Ein oberer und ein unterer Anschlag aus Metall signalisieren die Offen- und Geschlossenstellung von Abschlusskörpern, die mittels des Stellantriebs betätigt werden. Diese metallische Hülse, auch als Dom bezeichnet, wird, damit eine Anbindung an das Gehäuse möglich wird, mit einem thermoplastischen Kunststoff umspritzt und bildet somit als Unterbaugruppe der Absperrarmatur eine Antriebskartusche, die mittels der Heizwendelschweißtechnik an das Gehäuse angebunden wird. Damit sich die metallische Hülse bei den auftretenden Belastungen nicht von dem umgebenden Polyethylen trennt, ist die Hülse auf ihrer Außenseite mit Hinterschneidungen bildenden Verzahnungen versehen, in die der Kunststoff eindringt. Zwar wird hierdurch eine sichere Verbindung zwischen Metall und Kunststoff gewährleistet, jedoch ist die metallische Hülse aufwendig in der Herstellung.

Bei dem in der EP 0 711 947 A beschriebenen Absperrventil ist das metallische Ventilgehäuse ebenfalls mit Kunststoff umspritzt, wobei zur besseren Verankerung im Kunststoff Ringrillen vorgesehen sind. Zur Sicherung gegen Verdrehen des Ventilgehäuses im Kunststoff ist dieses wenigstens über einen Teil seiner Länge als Sechskant ausgebildet.

Die GB 613 520 A beschreibt eine Antriebskartusche mit einem Stellantrieb, bei dem eine Spindel in einem hohlzylindrischen Antriebselement geführt zwischen zwei axial beabstandeten Endpositionen, die durch die axiale Länge des Antriebselements definiert sind, bewegbar ist. Weiterhin umfasst die Antriebskartusche eine Domhülse, die das Antriebselement drehfest und verschiebefest umgibt, wobei die Domhülse aus einem an das Antriebselement angrenzenden Profilelement und einer das Profilelement umgebenden Außenhaut aufgebaut ist. Eine gattungsgemäße Antriebskartusche ist auch aus der US 1,958,988 bekannt.

Es ist daher die Aufgabe der Erfindung, den Aufbau der Antriebskartusche einer Absperrarmatur zu optimieren und insbesondere den herstellungstechnisch aufwendigen Übergang von der metallischen Hülse zum Kunststoffgehäuse, der bisher durch die oben angesprochene Umspritzung mit beispielsweise Polyethylen realisiert wird, zu vereinfachen.

Diese Aufgabe wird durch eine Antriebskartusche nach Anspruch 1 gelöst. Erfindungsgemäß liegt die Innenkontur der Domhülse nur in denjenigen Bereichen des Antriebselementes formschlüssig an in denen die zulässige Normalspannung einen vordefinierten Grenzwert überschreitet. Weiterhin besteht das Profilelement aus einem partiell aromatischen Thermoplasten mit einer Anteil verstärkender Fasern von mindestens 20 Gew.%. Es sind am Unrundprofil also Führungsflächen gebildet, die die Kräfte und Drehmomente aufnehmen, welche der Ursprung der Normalspannung sind. Vorgegebene Werte von Drehmomenten, die eine Absperrarmatur aufnehmen muss, liegen - im Regelfall durch Normen festgelegt - bei 250 Nm oder darüber, mit einem Faktor 2 als Sicherheitsaufschlag bei bis zu 500 Nm. Bei einer Absperrarmatur hat die Domhülse im Wesentlichen die entscheidende Aufgabe der Kraft- und Momentaufnahme während der Betätigung der Absperrarmatur und die Sicherstellung der Gasdichtheit bzw. Fluiddichtheit nach außen. Die Drehmomente können auf die Domhülse nur dann sicher übertragen werden, wenn die Flächenpressung den maximal zulässigen Wert des Werkstoffs nicht übersteigt. Daher werden durch das zu erwartende Drehmoment einerseits und die beteiligten Materialien andererseits Normalspannungen erzeugt, die bei unzulänglicher Auslegung der Antriebskartusche zur Rissbildung führen, was die Antriebskartusche bzw. die Absperrarmatur wegen der nicht mehr zu gewährleistenden Gas- bzw. Fluiddichtheit unbrauchbar macht. Die Erfindung macht sich diese Erkenntnis zunutze, indem dafür gesorgt wird, dass nur solche Bereiche von Antriebselement und Domhülse an der Kraftübertragung teilnehmen, die der Belastung gewachsen sind, in denen also die zulässige Normalspannung einen vordefinierten Grenzwert überschreitet.

Verfahren zum Berechnen der Normalspannung auf Basis der eingesetzten Materialien, und der zu erwartenden Kräfte und Drehmomente sind bekannt; sie verwenden üblicherweise die Finite-Elemente-Methode (FEM).

Es wird erfindungsgemäß der üblicherweise im Wesentlichen zylindrische Aufbau von Antriebselement und Domhülse durch einen ersetzt, der die Vorteile von Unrundprofilen nutzt.

"Unrundprofil" meint dabei, dass der Außenumfang des Antriebselementes, im Querschnitt betrachtet, obwohl er eckenfrei ist, von der reinen Kreisform abweicht. Unrundprofile sind insbesondere solche, die eine Exzentrizität zeigen.

Vorteilhaft ist das Unrundprofil ein Polygonprofil. Bei derartigen Profilen weist die Exzentrizität im Laufe der Kurvenerzeugung einen konstanten Wert auf. Polygonprofile entsprechen im Querschnitt einem Polygon, die Ecken sind jedoch gerundet. Derartige Polygonprofile werden oftmals als Welle-Nabe-Verbindung eingesetzt. Sie unterliegen dabei den Normen DIN 32711 und DIN 32712. So definiert die DIN 32712 das Polygonprofil P4C, das aus Radien aufgebaut ist, zwar aus vier großen, die einen Inkreis tangieren, und vier kleineren, die exakt auf dem Umkreis liegen. Dieses Profil wird bevorzugt bei der vorliegenden Anwendung eingesetzt.

Als Alternative kann das Unrundprofil ein Profil auf Basis von komplexen Zykloiden sein. Bei diesen findet im Laufe der Kurvenerzeugung eine periodische Variation der Exzentrizität statt. Abhängig von der Art der Exzentrizitätsfunktion wird zwischen komplexen Epizykloiden, komplexen Hypozykloiden und hybriden komplexen Zykloiden unterschieden. Für Einzelheiten wird auf "Numerische Untersuchung von unrunden Profilkonturen für Welle-Nabe-Verbindungen", Diplomarbeit Andreas Maiwald, Westsächsische Hochschule Zwickau (FH), September 2008, verwiesen. Derartige Profile auf Basis von komplexen Zykloiden vereinen die Vorteile der Polygonprofile mit denen von Zahnwellenprofilen. Durch Änderung von Parametern kann das Profil an die jeweiligen Bedürfnisse angepasst werden.

Ein derartiges Material wird von der EMS-Chemie AG, 7013 Domat / Ems (Schweiz), bereitgestellt und unter dem Produktnamen Grivory GV vertrieben. Eine für den Trinkwasserkontakt geeignete Qualität ist in EMS-Chemie AG: Technisches Merkblatt, Grivory HT1V-4FWA schwarz 9225; Domat / Ems (Schweiz), 2006, S. 1-5. - Firmenschrift, vorgestellt. Das Material ist im Spritzguss verarbeitbar, so dass sich aufwendige Oberflächenbehandlungen erübrigen. Die Kunststoffmatrix ist mit Glasfasern verstärkt, was es ermöglicht, das Festigkeitsniveau von handelsüblichen Druckgusslegierungen zu erreichen. Verfügbar sind Qualitäten mit einem Anteil von Glasfasern, der zwischen 20 und 60 Gew.% liegt. Die Verwendung dieses Materials bei einem einstückigen homogenen Innengehäuse einer Sanitärarmatur ist aus der EP 1 852 558 A1 bekannt. Ein Druckbehälter aus Grivory HTV-5H1 ist in der DE 102 07 613 C1 beschrieben. Dieses Material kann im Brauch- und/oder Abwasserbereich allerdings dann nicht bedenkenlos eingesetzt werden, wenn dies im Verbund mit anderen Materialien geschehen soll, denn es besteht hier wiederum das Problem, dass eine gas- bzw. fluiddichte Verbindung zwischen den verwendeten Materialien hergestellt werden muss.

Aus der WO 02/094536 A1 ist es bekannt, Kolbendichtungen herzustellen, indem Grivory GV-2H mit Polyurethanelastomer koextrudiert wird.

Nach alledem ist daher weiter erfindungsgemäß vorgesehen, dass die Außenhaut aus einem schweißbaren thermoplastischen Kunststoff besteht, der zudem mit dem partiell aromatischen Thermoplasten koextrudierbar ist. Ein geeigneter Thermoplast ist Polyethylen, wobei das Polyethylen mit einem Haftvermittler versetzt ist, um einen chemischen Verbund zum Profilelement zu erzielen. Die Herstellung der Domhülse erfolgt in einem einstufigen Prozess als 2K-Teil in einem Spritzgießwerkzeug.

Nach einer weiteren Ausführungsform kann der Haftvermittler auf das Profilelement und/oder die Außenhaut an den zu verhaftenden Bereichen aufgebracht und über Druck und Wärme aktiviert werden.

Auch kann es zweckmäßig sein, einen mehrschichtigen Aufbau vorzusehen, der mindestens eine Schicht aus partiell aromatischem Thermoplasten (mit Faseranteil), eine Schicht aus Haftvermittler enthaltendem thermoplastischem Kunststoff und eine Schicht aus thermoplastischem Kunststoff aufweist.

Das Profilelement ist dabei nach einer bevorzugten Ausführungsform so gestaltet, dass es eine im Wesentlichen konstante Wanddicke aufweist.

Es kann aber ebenso vorteilhaft sein, dem Profilelement eine variierende Wanddicke zu verleihen. Bei Verringerung der Wanddicke nimmt deren Verformbarkeit zu, so dass Spannungsspitzen besser absorbiert werden können. Dabei können Grundsätze der Bionik angewandt werden, um beispielsweise mit Hilfe von Computersimulation Profile mit weitgehend homogener Spannungsverteilung und kerbspannungsfreien Oberflächen zu erzeugen, wobei der selbstoptimierende Wachstums- und Reparaturmechanismus von Bäumen oder Knochen zugrundegelegt werden könnte, wie es in "Bionik-Trends in Industrie und Gesellschaft und Anwendungen bei der Continental AG, Juni 2002" vorgeschlagen wird.

Weiterhin weisen vorzugsweise eine oder mehrere Freistellungen des Profilelementes, mit denen das Profilelement nicht am Antriebselement anliegt, Schrägen auf. Diese bilden einerseits die erforderlichen Entformschrägen für den Spritzgießprozess in den Bereichen mit geringer Belastung. Im Einsatz dienen sie zur Spülung.

Mit der Antriebskartusche gemäß der vorliegenden Erfindung gelingt es überraschenderweise, in einer Absperrarmatur, beispielsweise gemäß der DE 10 2006 030 027 A1, die vorhandene, mit Polyethylen umspritzte Hülse vollständig durch eine Domhülse zu ersetzen, die keine metallischen Anteile mehr aufweist. Vielmehr ist sie unter Verwendung eines partiell aromatischen Thermoplasten hergestellt, der einen Anteil.verstärkender Fasern, beispielsweise Glasfasern, von mindestens 20 Gew.%, vorzugsweise mindestens 40 Gew.% aufweist. Neben der Verwendung von Glasfasern ist der Einsatz von Carbonfasern, Aramidfasern oder dergleichen oder Kombination aus diesen denkbar. Der partiell aromatische Thermoplast kann ein Polyamid sein, welches vollständig amorph oder in einem teilkristallinen Zustand vorliegen kann.

Die Anbindung der erfindungsgemäßen Antriebskartusche an das Gehäuse einer Absperrarmatur kann nun in einfacher Weise zum Beispiel durch Elektroschweißen geschehen. Bevorzugt wird mittels der Heizwendelschweißtechnik gearbeitet.

Im Folgenden soll die Erfindung anhand der beigefügten Zeichnung näher erläutert werden. Dabei zeigt:
- Figur 1: eine Teil-Längsschnittansicht einer Absperrarmatur mit einer Antriebskartusche gemäß der vorliegenden Erfindung;
- Figur 2: eine Querschnittsansicht entlang der Linie A-A aus Figur 1, wobei der Stellantrieb weggelassen ist;
- Figur 3: eine Schnittansicht ähnlich der Figur 2, jedoch mit Stellantrieb; und
- Figuren 4a, 4b und 4c: Simulationen für verschiedene Ausgestaltungen einer Domhülse.

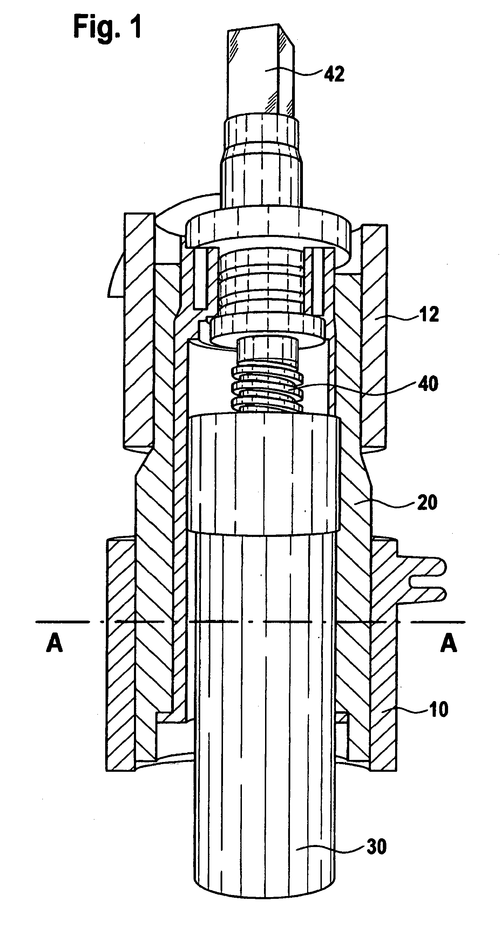

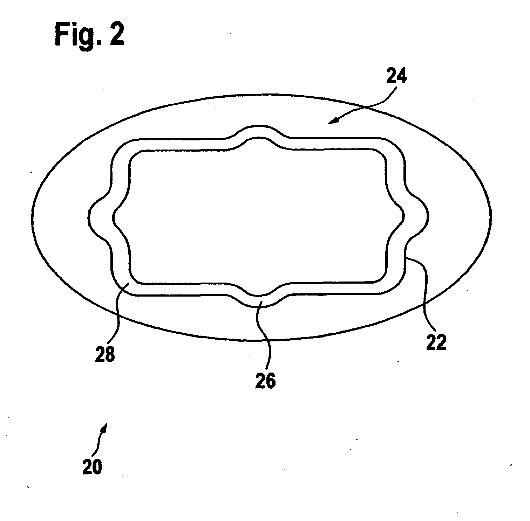

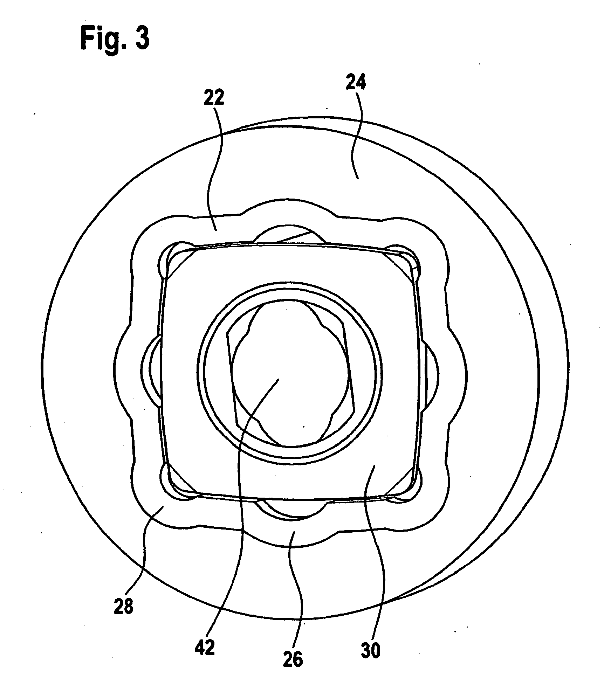

Figur 1 zeigt eine Teilansicht einer Absperrarmatur im Bereich der Antriebskartusche. Der Stellantrieb, bestehend aus einer Führungsbuchse 30 als Antriebselement und einer in dieser über einen Antriebsvierkant 42 bewegbaren Spindel 40, befindet sich dabei innerhalb einer Domhülse 20, die, wie besser in den Figuren 2 und 3 erkennbar ist, aus einem Profilelement 22 und einer das Profilelement 22 umgebenden Außenhaut 24 aufgebaut ist. Das Profilelement 22 besteht dabei aus einem teilweise aromatischen Thermoplasten mit einem Anteil verstärkender Fasern, so wie Glasfasern, Carbonfasern, Aramidfasern oder Kombinationen aus diesen, von mindestens 20 Gew.%, bevorzugt aber von 40 Gew.% und darüber. Der Anschluss der Domhülse 20 an das umgebende Gehäuse 10, 12 kann dabei über herkömmliche Techniken, wie Elektroschweißen, geschehen. Bevorzugt wird an den Grenzflächen von Domhülse 20 zu umgebendem Gehäuse 10, 12 ein Haftvermittler eingesetzt. Als Alternative kann die Außenhaut 24 einen Haftvermittler enthalten, der einerseits für die chemische Anbindung an das Profilelement 22 sorgt und andererseits den Schweißvorgang an das Gehäuse 10, 12 vereinfacht. Jeweils ein Anschlag zur Definition der Schließ- bzw. Offenstellung eines oder mehrerer Anschlusskörper (nicht gezeigt) kann gegebenenfalls an der Spindel 40 ausgebildet werden. Insbesondere ist der untere Anschlag des Stellantriebes nicht in die Domhülse 20 integriert, sondern wird über eine Anschlagmutter auf die Spindel 40 übertragen, so dass die Konstruktion aus Kunststoff entlastet wird. Die Anschlusskörper können auf an sich bekannte Weise in das Gewinde am unteren Ende des Antriebselementes eingeschraubt werden.

Das Polygonprofil des Profilelementes 22 nimmt zum einen die Drehmomentbelastungen während der Betätigung des Stellantriebes auf und trägt durch seine Profilform zur Zeitstandsfestigkeit bei. Des Weiteren stellt das Polygonprofil die Führung und die Verdrehsicherung des Stellantriebes dar.

In einer praktischen Ausgestaltung, wie sie in den Figuren 2 und 3 gezeigt ist, ist das Profilelement ein Polygonprofil P4C nach DIN 32712, das bevorzugt eine im Wesentlichen konstante Wanddicke aufweist. In den Seitenmitten der Domhülse verlaufen in Längsrichtung der Hülse halbrunde Vorsprünge 26, die Freistellungen in Bezug auf das Antriebselement entsprechen, also Bereichen, an denen das Profilelement 22 nicht am Antriebselement 30 anliegt. Diese Freistellungen sind in solchen Bereichen vorgesehen, in denen nur eine relativ geringe Belastung auftritt. Sie sind mit den erforderlichen Entformschrägen für den Spritzguss versehen und dienen beim Einsatz für die Spülung. Ähnliche Freistellungen 28 befinden sich auch im Längskantenbereich des Polygonprofils.

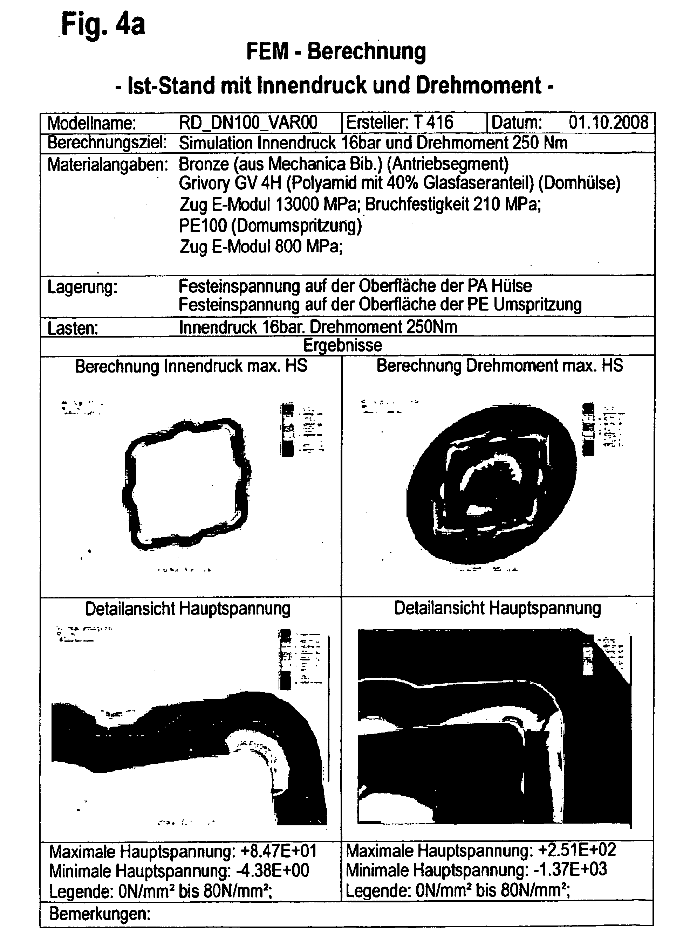

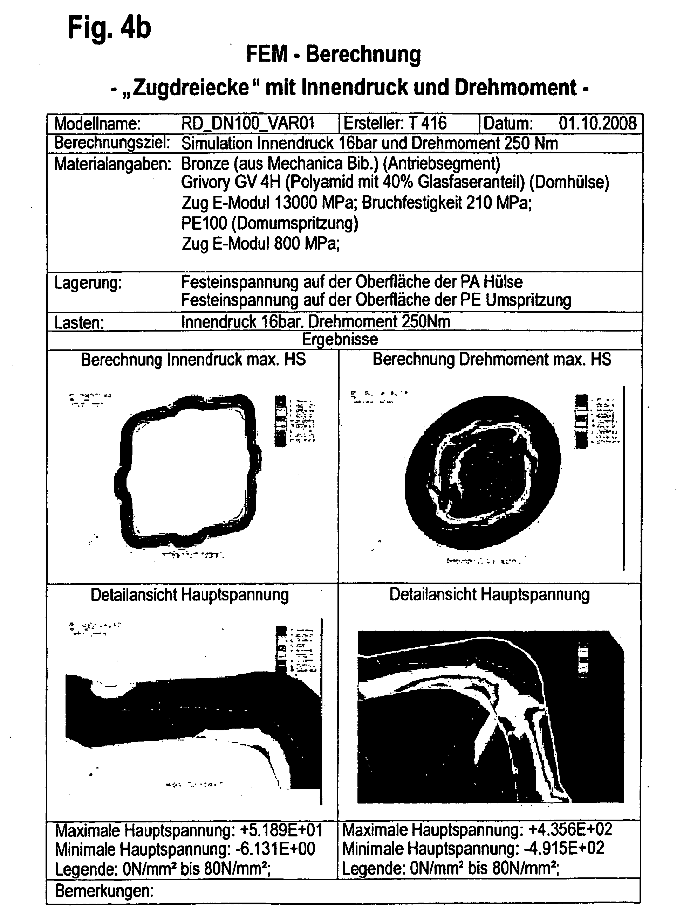

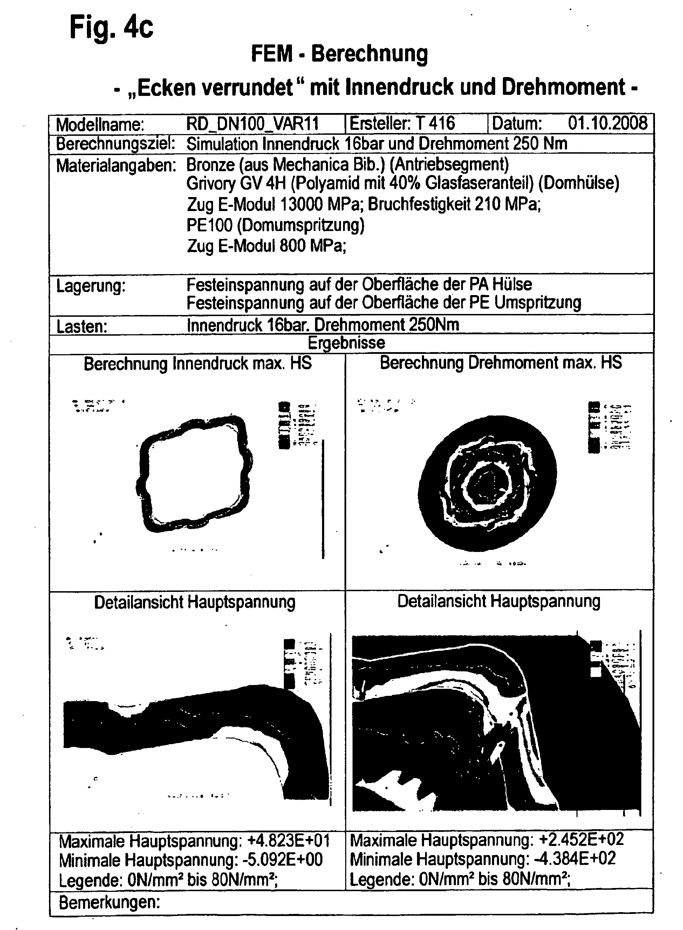

Die Figuren 4a, 4b und 4c zeigen Simulationen, die zur Optimierung des Profils der Domhülse 20 durchgeführt worden sind. Dabei ist in Figur 4a die Situation zusammengefasst, bei der das Polygon im Kantenbereich gerundet ist, und zwar mit gleichmäßiger Wandstärke. Diese Kontur hat sich als ideal bezüglich der Torsionsbelastung herausgestellt. Figur 4b zeigt die Situation mit verstärkten Rundungen im Kantenbereich, was zu einer Optimierung bezüglich des Innendruckes und der Torsionsbelastung führt. Die Ausbildung von sogenannten "Zugdreiecken", wie in Figur 4c veranschaulicht, zeigt ähnlich gute Werte beim Innendruck, jedoch ein schlechteres Torsionsverhalten.

Die Absperrarmatur mit erfindungsgemäßer Antriebskartusche wurde einer Dauerprüfung ausgesetzt, bei der sich nur ein sehr geringer Verschleiß an der Hülse ergab. Dabei wurden Betriebsmomente im Bereich von 250 Nm bis 500 Nm aufgenommen. Die Prüfung gemäß DIN EN 12201-4 (Kugelfalltest, Widerstand gegen Schlagbeanspruchung) wurde positiv abgeschlossen. Nach der Prüfung waren keinerlei Risse feststellbar.

Die in der vorstehenden Beschreibung, in der Zeichnung sowie in den Ansprüchen offenbarten Merkmale der Erfindung können sowohl einzeln als auch in beliebiger Kombination für die Verwirklichung der Erfindung wesentlich sein.

## Patentansprüche

1. Antriebskartusche, mit
- einem Stellantrieb (30, 40), bei dem eine Spindel (40) in einem hohlzylindrischen Antriebselement (30) geführt zwischen zwei axial beabstandeten Endpositionen, die durch die axiale Länge des Antriebselementes (30) definiert sind, bewegbar ist, wobei das Antriebselement (30) eine Außenkontur mit Unrundprofil hat; und
- einer Domhülse (20), die das Antriebselement (30) drehfest und verschiebefest umgibt, wobei die Domhülse (20) aus einem an das Antriebselement (30) angrenzenden Profilelement (22) und einer das Profilelement (22) umgebenden Außenhaut (24) aufgebaut ist,
**dadurch gekennzeichnet, dass** das Profilelement (22) aus einem partiell aromatischen Thermoplasten mit einem Anteil verstärkender Fasern von mindestens 20 Gew.-% besteht, und die Innenkontur der Domhülse (20) nur in denjenigen Bereichen des Antriebselementes (30) formschlüssig anliegt, in denen die zulässige Normalspannung einen vordefinierten Grenzwert überschreitet und damit die Flächenpressung den maximal zulässigen Wert des Domhülsenwerkstoffs nicht übersteigt.

2. Antriebskartusche nach Anspruch 1, **dadurch gekennzeichnet, dass** das Unrundprofil ein Polygonprofil ist.

3. Antriebskartusche nach Anspruch 2, **dadurch gekennzeichnet, dass** das Polygonprofil ein P4C-Profil ist.

4. Antriebskartusche nach Anspruch 1, **dadurch gekennzeichnet, dass** das Unrundprofil ein Profil auf Basis von komplexen Zykloiden ist.

5. Antriebskartusche nach Anspruch 1, **dadurch gekennzeichnet, dass** die Außenhaut (24) aus einem schweißbaren thermoplastischen Kunststoff besteht, der zudem mit dem partiell aromatischen Thermoplasten koextrudierbar ist.

6. Antriebskartusche nach Anspruch 5, **dadurch gekennzeichnet, dass** der thermoplastische Kunststoff einen Haftvermittler zum Bilden eines chemischen Verbundes zumindest mit dem partiell aromatischen Thermoplasten enthält.

7. Antriebskartusche nach Anspruch 1, **dadurch gekennzeichnet, dass** auf das Profilelement (22) und/oder die Außenhaut (24) an den zu verhaftenden Bereichen ein Haftvermittler aufgebracht ist.

8. Antriebskartusche nach Anspruch 1, **dadurch gekennzeichnet, dass** die Domhülse (20) eine zwischen dem Profilelement (22) und der Außenhaut (24) angeordnete Schicht aus thermoplastischem Kunststoff aufweist, die einen Haftvermittler enthält.

9. Antriebskartusche nach Anspruch 1, **dadurch gekennzeichnet, dass** das Profilelement (22) eine im Wesentlichen konstante Wanddicke aufweist.

10. Antriebskartusche nach Anspruch 1, **dadurch gekennzeichnet, dass** das Profilelement (22) eine variierende Wanddicke aufweist.

11. Antriebskartusche nach Anspruch 10, **dadurch gekennzeichnet, dass** die Wanddicke nach Grundsätzen der Bionik optimiert ist.

12. Antriebskartusche nach Anspruch 1, **dadurch gekennzeichnet, dass** eine oder mehrere Freistellungen (26, 28), des Profilelementes (22), mit denen das Profilelement nicht am Antriebselement (30) anliegt, Schrägen aufweisen.

## Claims

1. A drive cartridge, comprising
- an actuating mechanism (30, 40), in which a spindle (40) can be guided in a hollow cylindrical drive element (30) between two end positions at an axial distance from another, said positions being defined by the axial length of the drive element (30) wherein said drive element (30) comprises an outer contour having a out-of-roundness profile; and
- a dome-shaped casing (20) that surrounds the drive element (30) in a non-rotatable and non-displaceable manner; wherein said dome-shaped casing (20) is constructed of a profile element (22) adjoining the drive element (30) and an outer skin (24) surrounding said profile element (22).
**characterized in that** said profile element (22) consists of a partially aromatic thermoplastic having a fraction of reinforcing fibers of at least 20 weight%, and that the internal contour of said dome-shaped casing (20) has a positive fit only in those areas of the drive element (30) in which the permissible normal stress exceeds a predefined upper limit and thus the surface pressure does not exceed the maximum admissible value of the dome-shaped casing material.

2. The drive cartridge of claim 1, **characterized in that** said out-of-roundness profile is a polygon profile.

3. The drive cartridge of claim 2, **characterized in that** said polygon profile is a P4C profile.

4. The drive cartridge of claim 1, **characterized in that** said out-of-roundness profile is a profile on basis of complex cycloids.

5. The drive cartridge of claim 1, **characterized in that** said outer skin (24) consists of a fusible thermoplastic polymer which furthermore can be co-extruded with said partially aromatic thermoplastic.

6. The drive cartridge of claim 5, **characterized in that** thermoplastic polymer contains a bonding agent for producing a chemical bonding at least with said partially aromatic thermoplastic.

7. The drive cartridge of claim 1, **characterized in that** said a bonding agent is applied to the profile element (22) and/or said outer skin (24) on the areas to be bonded together.

8. The drive cartridge of claim 1, **characterized in that** said dome-shaped casing (20) comprises a layer of thermoplastic polymer containing a bonding agent which is disposed between said profile element (22) and said outer skin (24).

9. The drive cartridge of claim 1, **characterized in that** said profile element (22) comprises an essentially constant wall thickness.

10. The drive cartridge of claim 1, **characterized in that** said profile element (22) comprises a varying wall thickness.

11. The drive cartridge of claim 10, **characterized in that** said wall thickness is optimized according to the principles of bionics.

12. The drive cartridge of claim 1, **characterized in that** one or more exposed areas (26, 28) of said profile element (22) where said profile element does not abut to said drive element (30), comprise slopes.

## Revendications

1. Cartouche d'entraînement comportant :
- un actionneur (30, 40) dans lequel une broche (40), insérée dans un élément d'entraînement cylindrique creux (30), peut être déplacée entre deux positions d'extrémité espacées dans le sens axial, positions d'extrémité qui sont définies par la longueur axiale de l'élément d'entraînement (30), l'élément d'entraînement (30) comportant un contour externe pourvu d'un profilé ovalisé et
- une douille bombée (20) qui entoure l'élément d'entraînement (30) en empêchant sa rotation et son coulissement, la douille bombée (20) étant constituée d'un profilé (22) adjacent à l'élément d'entraînement (30) et d'une enveloppe (24) entourant le profilé (22),
**caractérisée en ce que** le profilé (22) est constitué d'un thermoplaste partiellement aromatique comportant une part de fibres de renforcement d'au moins 20 % en poids et le contour interne de la douille bombée (20) vient en contact par coopération de formes uniquement dans les zones de l'élément d'entraînement (30) dans lesquelles la contrainte normale admise dépasse une valeur limite prédéfinie et ainsi la pression superficielle ne dépasse pas la valeur autorisée maximale du matériau de la douille bombée.

2. Cartouche d'entraînement selon la revendication 1, **caractérisée en ce que** le profilé ovalisé est un profilé polygonal.

3. Cartouche d'entraînement selon la revendication 2, **caractérisée en ce que** le profilé polygonal est un profilé P4C.

4. Cartouche d'entraînement selon la revendication 1, **caractérisée en ce que** le profilé ovalisé est un profilé à base de cycloïdes complexes.

5. Cartouche d'entraînement selon la revendication 1, **caractérisée en ce que** l'enveloppe (24) est composée d'une matière thermoplastique pouvant être soudée qui peut par ailleurs être co-extrudée au thermoplaste partiellement aromatique.

6. Cartouche d'entraînement selon la revendication 5, **caractérisée en ce que** la matière thermoplastique contient un agent adhésif servant à former une liaison chimique au moins avec le thermoplaste partiellement aromatique.

7. Cartouche d'entraînement selon la revendication 1, **caractérisée en ce qu'**on a appliqué un agent adhésif sur les zones à coller se trouvant sur le profilé (22) et/ou l'enveloppe (24).

8. Cartouche d'entraînement selon la revendication 1, **caractérisée en ce que** la douille bombée (20) contient une couche de matière thermoplastique, placée entre le profilé (22) et l'enveloppe (24), matière thermoplastique qui contient un agent adhésif.

9. Cartouche d'entraînement selon la revendication 1, **caractérisée en ce que** le profilé (22) comporte une épaisseur de paroi sensiblement constante.

10. Cartouche d'entraînement selon la revendication 1, **caractérisée en ce que** le profilé (22) présente une épaisseur de paroi variable.

11. Cartouche d'entraînement selon la revendication 10, **caractérisée en ce que** l'épaisseur de paroi est optimisée d'après les principes de la bionique.

12. Cartouche d'entraînement selon la revendication 1, **caractérisée en ce qu'**une ou plusieurs positions libres (26, 28) du profilé (22), par lesquelles l'élément profilé ne repose pas sur l'élément d'entraînement (30), présentent des chanfreins.
